# EUROPÄISCHE PATENTSCHRIFT

(11) **EP 1 480 546 B1**
(45) Veröffentlichungstag und Bekanntmachung des Hinweises auf die Patenterteilung: **09.05.2007**
(21) Anmeldenummer: 03742930.5
(22) Anmeldetag: 11.02.2003
(51) Int. Cl.: A47L 9/30, A47L 9/00, G02B 6/00

(54) **STAUBSAUGER MIT LICHTLEITERELEMENT**
VACUUM CLEANER WITH LIGHT GUIDING ELEMENT
ASPIRATEUR COMPRENANT UN ELEMENT DE GUIDAGE DE LUMIERE

(30) Priorität: 27.02.2002 DE 10208366
(43) Veröffentlichungstag der Anmeldung: 01.12.2004
(73) Patentinhaber: BSH Bosch und Siemens Hausgeräte GmbH, 81739 München (DE)
(72) Erfinder: SEITH, Thomas, 97616 Bad Neustadt (DE)
(86) Internationale Anmeldenummer: PCT/EP2003/001330
(87) Internationale Veröffentlichungsnummer: WO 2003/071915

(56) Entgegenhaltungen:
- EP-A- 0 401 531
- DE-A- 3 539 113
- US-A- 2 107 016
- US-A- 4 245 370
- US-A- 4 692 754
- US-A- 4 733 430
- US-A- 4 955 103
- US-A- 5 467 501

## Beschreibung

Die Erfindung betrifft einen Staubsauger gemäß dem Oberbegriff des Patentanspruch 1.

Staubsauger sind bekannt, die optische Anzeigemittel aufweisen, die den Benutzer darüber informieren, ob z.B. der Staubsauger in Betrieb ist, der Staubbeutel voll ist oder welche Leistung der Staubsauger erbringt. Die optischen Anzeigemittel können als transparente, bzw. teiltransparente Fenster in einer Gehäusewand des Staubsaugers ausgebildet sein. Hinter diesen Fenstern sind Lichtquellen auf einer elektrischen Baueinheit angeordnet, die das Fenster direkt anstrahlen.

Nachteilig bei diesen bekannten Staubsaugern ist es, dass die Lichtquellen direkt unter den Fenstern angeordnet sein müssen, um ein gut erleuchtetes Anzeigemittel zu ermöglichen. Es muss somit besonders darauf geachtet werden, dass die Lichtquellen im Inneren des Staubsaugergehäuses genau dort in der Nähe angebracht sind, wo das Gehäuse die Anzeigemittel trägt.

DE-A-35 39 113 offenbart einem Staubsauger umfassend einem Lichtleiterbauteil, das zwischen Lichtquelle und Anzeigemittel angeordnet ist.

Aufgabe der Erfindung ist es, einen Staubsauger zu schaffen, bei dem die Lichtquellen an anderen Stellen als direkt unter den Anzeigemitteln angeordnet sein können und bei dem die Anzeigemittel trotzdem gut erleuchtet sind.

Diese Aufgabe wird erfindungsgemäß durch einen Staubsauger mit den Merkmalen des Anspruchs 1 gelöst. Dadurch, dass zwischen Lichtquelle und Anzeigemittel ein Lichtleiterbauteil angeordnet ist, das von der mindestens einen Lichtquelle ausgesandtes Licht an das mindestens eine Anzeigemittel, das als Schwellpfeil ausgebildet ist, leitet, können Lichtquelle und Anzeigemittel einen deutlichen Versatz aufweisen, ohne das die Leuchtkraft der Anzeige beeinträchtigt wird. Dies hat den Vorteil, dass die Positionen der Anzeigemittel am Gehäuse des Staubsaugers bei verschiedenen Modellen sehr unterschiedlich gewählt werden können und die Lage der Lichtquellen im Inneren des Staubsaugers für alle Modelle gleich blieben können. Für verschiedene Modelle von Staubsaugern kann ein identischer innerer Aufbau verwendet werden. Die entstehenden Lageunterschiede von Lichtquellen und Anzeigemittel können durch verschieden gestaltete Lichtleiterbauteile überbrückt werden.

Oft sind die Lichtquellen als lichtemittierende Dioden ausgebildet, die an einer elektrischen Baueinheit, wie z.B. einer Platine direkt angelötet sind. Mehrere vorhandene Dioden sind dabei in ihren gegenseitigen Lagen starr fixiert. Die Platine wird im allgemeinen im Inneren des Staubsaugers an einem Flansch des Gehäuses oder an weiteren im Gehäuse befestigten Staubsaugerkomponenten befestigt. Dadurch ist auch die Lage der Gruppe von Dioden im Gehäuse des Staubsaugers starr festgelegt.

Durch das erfindungsgemäße Lichtleiterbauteil können bei verschiedenen Staubsaugermodellen unterschiedliche Gehäusedeckel mit unterschiedlich angeordneten Anzeigemittel in identische Grundgeräte eingesetzt werden. Dabei erübrigt es sich das Grundgerät an die verschiedenen Modelltypen anzupassen. Es ist lediglich erforderlich für die verschiedenen Staubsaugermodelle unterschiedliche Lichtleiterbauteile zu verwenden. Die alleinige Anpassung der Lichtleiterbauteile ist kostengünstig mit wenig Aufwand möglich. Eine Anpassung der Einbaulage der Lichtquellen oder der Platine, die die Lichtquellen trägt ist wesentlich aufwendiger. So ergibt sich aus der Erfindung eine kostengünstige Modellreihe von Staubsaugern. Bei einer Neukonstruktion eines Staubsaugers können in gleicher Weise bereits bekannte Komponenten beibehalten werden und nur die Lichtleiterbauteile und der Gehäusedeckel müssen konstruktiv neu gestaltet werden.

In einer besonderen Ausbildung des Lichtleiterbauteils weist dieser eine der Lichtquelle zugewandte Eintrittsfläche, eine dem Anzeigemittel zugewandte Austrittsfläche und mindestens eine Reflektionsfläche aufweist, zum Reflektieren zumindest eines Teils des über die Eintrittsfläche in das Lichtleiterbauteil eingeleitete Licht in Richtung der Austrittsfläche. Durch die Anzahl und Lage der Reflektionsflächen kann das Licht von nahezu jeder beliebigen Eintrittsstelle an das Anzeigemittel weitgehend verlustfrei hingeführt werden. Die Anzahl und Lage der Reflektionsflächen ist abhängig von dem konkreten Lageunterschied zwischen Lichtquelle und zugehörigem Anzeigemittel.

In einer vorteilhaften Ausgestaltung umfasst das Lichtleiterbauteil eine Vielzahl von Lichtleiterabschnitten, die das von verschiedenen Lichtquellen ausgesandte Licht in separate Anzeigemittel leitet. Dies hat den Vorteil, dass mehrere unabhängig voneinander ansteuerbare Lichtquellen mehreren unterschiedlichen Anzeigemitteln zugeordnet werden können und nur ein einziges Lichtleiterbauteil erforderlich ist. Die in einem Lichtleiterbauteil zusammengefassten mehreren Lichtleiterabschnitte sind durch geeignete Trennstege optisch gegeneinander entkoppelt, so dass diese sich nicht gegenseitig beeinflussen.

In einer bevorzugten Variante der Erfindung ist jeder Lichtleiterabschnitt jeweils mit einer Lichtquelle und mit einem zugeordneten Anzeigemittel optischen verbunden. Je nach Funktion des Anzeigemittels, ob z.B. der Staubsauger in Betrieb ist, der Staubbeutel voll ist oder welche Leistung der Staubsauger erbringt, können diese sich in Größe, Form oder Farbe unterscheiden. Erfindungsgemäß ist das Anzeigemittel welches die Leistung des Staubsaugers anzeigt als Schwellpfeil ausgebildet. Der Schwellpfeil umfasst eine Reihe von Anzeigefeldern, die ansteigende Größen aufweisen. Bei sehr geringer Leistung werden nur wenige Lichtquellen betrieben, wodurch nur wenige Segmente des Schwellpfeils aufleuchten. Bei hoher Leistung werden viele Lichtquellen betrieben und viele Segmente des Schwellpfeils sind beleuchtet. Bei voller Leistung leuchten alle Lichtquellen, wodurch alle Segmente des Schwellpfeils ausgeleuchtet sind.

In einer bevorzugten Ausgestaltung weist das Lichtleiterbauteil Rastmittel zur Befestigung des Lichtleiterbauteils an der elektrischen Baueinheit. Ein solches Lichtleiterbauteil kann z.B. an den Rand einer Platine, die lichtemittierende Dioden trägt, angeklipst sein. Dies hat den Vorteil, dass Platine und Lichtleiterbauteil als gemeinsame Baugruppe vormontiert sein kann.

Alternativ kann das Lichtleiterbauteil Rastmittel aufweisen, die an einer Innenseite des Gehäuses angeklipst sein können. Dies hat den Vorteil, dass das Lichtleiterbauteil, welches sich je nach Staubsaugermodell unterscheidet, an dem Gehäusedeckel befestigt sein kann, welches sich je nach Modell unterscheidet. Dies ermöglicht eine einfache Zuordnung zusammengehöriger Gehäusedeckel und Lichtleiterbauteile. Gehäusedeckel zusammen mit den Anzeigemittels und dem Lichtleiterbauteil können dann als vormontiertes Bauteil in ein Grundgerät eingesetzt werden.

Für eine kostengünstige Herstellung der erfindungsgemäßen Lichtleiterbauteile können diese im Kunststoff-Spritzgußverfahren hergestellt sein. Ein erfindungsgemäßer Staubsauger ist anhand der Zeichnungen näher erläutert.
- Figur 1: zeigt eine Draufsicht auf einen erfindungsgemäßen Staubsauger,
- Figur 2: zeigt eine Seitenansicht einer Baugruppe von elektrischer Baueinheit, Lichtquellen, Lichtleiterbauteil und Anzeigemittel,
- Figur 3: zeigt das Lichtleiterbauteil aus Figur 2 in einer Seitenansicht,
- Figur 4: zeigt das Lichtleiterbauteil aus Figur 2 und 3 in einer Ansicht von unten.

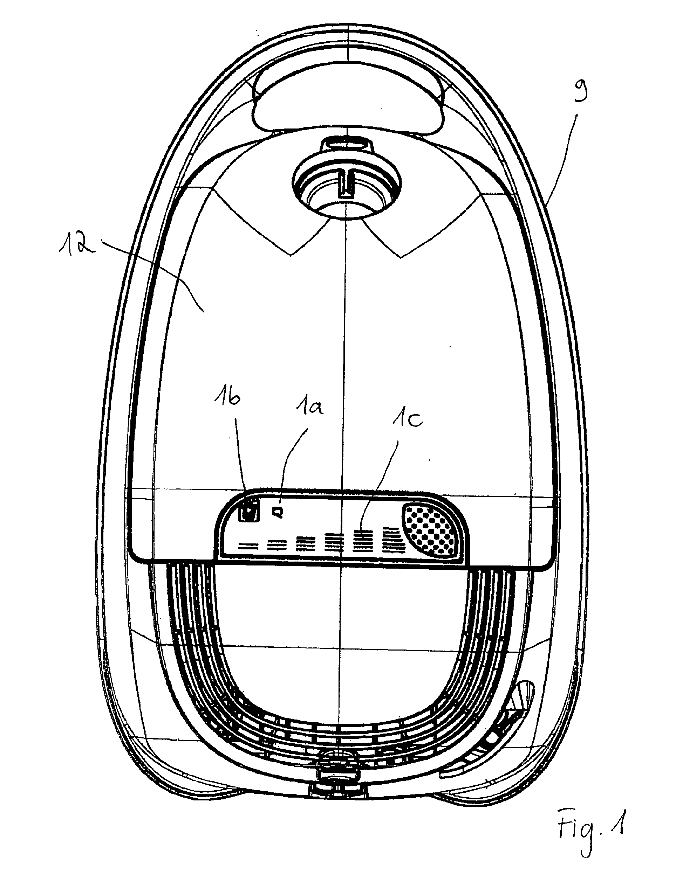

In der Figur 1 ist der erfindungsgemäße Staubsauger dargestellt. Ein erstes Anzeigemittel 1a ist als Betriebsanzeige ausgebildet. Ein zweites Anzeigemittel 1b ist als Filterbeutelanzeige ausgebildet. Ein drittes Anzeigemittel 1c umfasst eine Vielzahl von unterschiedlich dimensionierten Anzeigeeinheiten, die einen Schwellpfeil bilden, über den die Leistung angezeigt ist. Erstes Anzeigemittel 1 a, zweites Anzeigemittel 1b und drittes Anzeigemittel 1c sind in einem Deckel 12 eines Gehäuses 9 untergebracht.

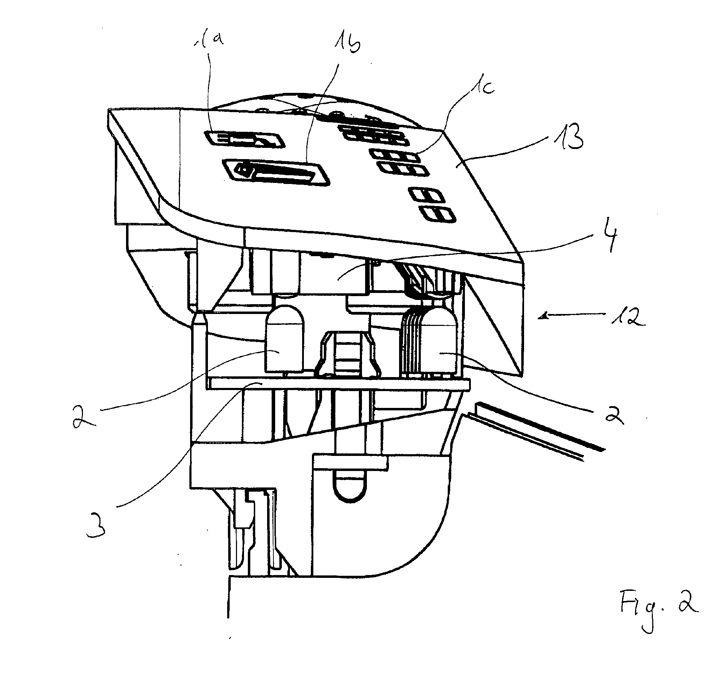

Figur 2 zeigt einen Abschnitt 13 des Deckels 12, der das erste Anzeigemittel 1 a, das zweite Anzeigemittel 1 b und das dritte Anzeigemittel 1 c auf dessen Oberfläche aufweist. In einem Abstand von der Oberfläche des Abschnitts 13 sind die Lichtquellen 2 auf einer elektrischen Baueinheit 3 befestigt. Die Lichtquellen 2 sind als lichtemittierende Dioden ausgebildet. Die elektrische Baueinheit 3 ist als Platine ausgebildet. Zwischen den Lichtquellen 2 und den Anzeigemitteln 1a,1b,1c ist ein Lichtleiterbauteil 4 angeordnet.

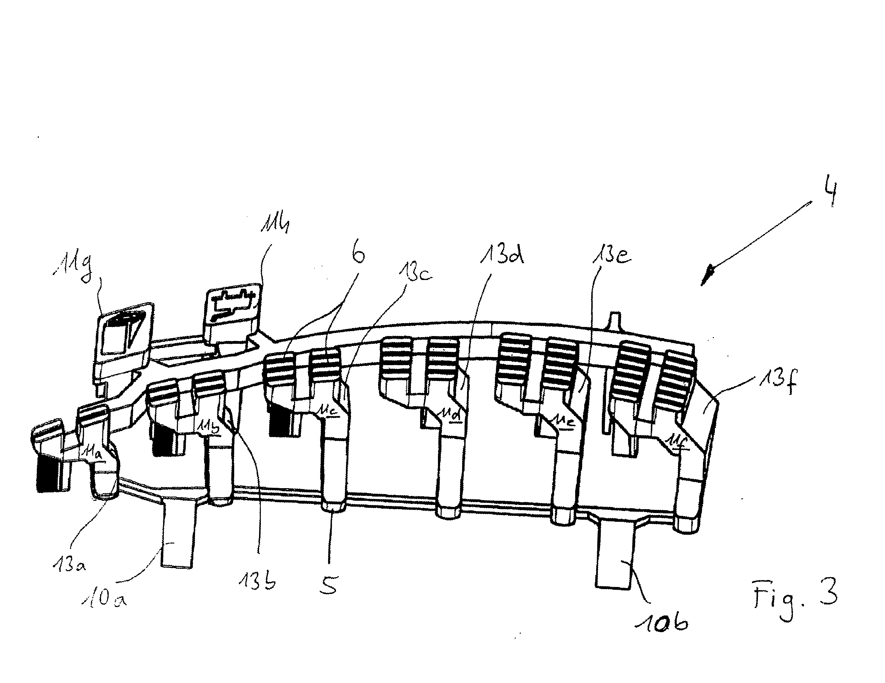

Die Figur 3 zeigt das Lichtleiterbauteil 4 aus der Figur 2. Das Lichtleiterbauteil 4 ist als einstückiges Kunststoff-Spritzgußteil ausgebildet. Insgesamt sind an diesem Lichtleiterbauteil 4 sechs optisch getrennte Lichtleiterabschnitte 11a, 11b, 11c, 11d, 11e, 11f vorhanden. Jeder der Lichtleiterabschnitte 11 weist eine Eintrittsfläche 5 auf, über die das von der Lichtquelle 2 (Figur1) ausgesandte Licht eintritt. An jedem Lichtleiterabschnitt ist mindestens eine Austrittsfläche 6 vorhanden. In der gezeigten Variante weist jeder Lichtleiterabschnitt 11 eine Eintrittsfläche 5, welche mit zwei Austrittsflächen 6 optisch verbunden ist. Alle sechs optisch getrennten Lichtleiterabschnitte 11a, 11b, 11c, 11d, 11e, 11f bilden den Schwellpfeil der Leistungsanzeige. Das Lichtleiterbauteil 4 umfasst auch einen gesonderten Lichtleiterabschnitt 11g für die Filterbeutelanzeige und einen Lichtleiterabschnitt 11h für die Betriebsanzeige. An dem Lichtleiterbauteil 4 sind zwei Rastmittel 10a und 10b angeformt, welche das Lichtleiterbauteil 4 an der elektrischen Baueinheit 3 (Figur 2) befestigt.

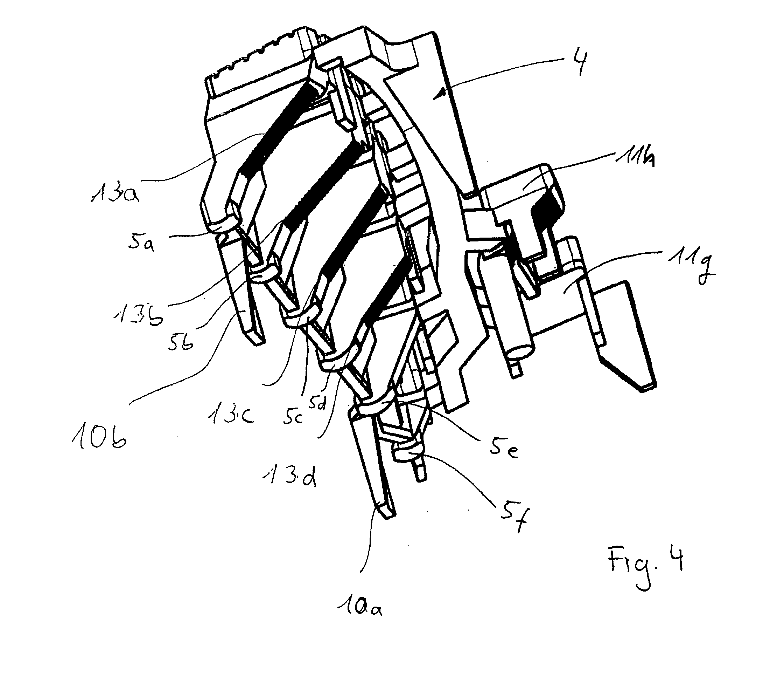

Sowohl in Figur 3 als auch in Figur 4 sind eine Vielzahl von Reflektionsflächen 13 angeordnet, die das über die Eintrittsfläche 5 in das Lichleiterbauteil 4 eintretende Licht in geeigneter weise zur Austrittsfläche hin reflektiert.

## Patentansprüche

1. Staubsauger mit mindestens einem an einem Gehäuse (9) angeordneten Anzeigemittel (1), das durch mindestens eine zugeordnete elektrische Lichtquelle (2) mit Licht gespeist ist, zur optischen Anzeige eines Betriebszustandes, mit einer elektrischen Baueinheit (3), die in Abhängigkeit des Betriebszustandes die mindestens eine Lichtquelle (2) ansteuert, wobei zwischen Lichtquelle (2) und Anzeigemittel (1) ein Lichtleiterbauteil (4) angeordnet ist, das von der mindestens einen Lichtquelle (2) ausgesandtes Licht an das mindestens eine Anzeigemittel (1) leitet, das einen die Leistung des Staubsaugers anzeigenden Schwellpfeil aufweist, der in Abhängigkeit der Leistung des Staubsaugers entsprechend ausgeleuchtet ist.

2. Staubsauger nach Anspruch 1, **dadurch gekennzeichnet, dass** die Anzeigemittel (1) sich in Größe, Form oder Farbe unterscheiden.

3. Staubsauger nach Anspruch 1 oder 2, **dadurch gekennzeichnet, dass** der Schwellpfeil eine Vielzahl von unterschiedlich dimensionierten Anzeigeeinheiten aufweist, die zur Leistungsanzeige eine Reihe von Anzeigefeldern ansteigender Größe bilden.

4. Staubsauger nach einem der vorhergehenden Ansprüche, **dadurch gekennzeichnet, dass** das Lichtleiterbauteil (4) eine Vielzahl von Lichtleiterabschnitten (11) umfasst, die das von verschiedenen Lichtquellen (2) ausgesandte Licht in separate Anzeigefelder leitet.

5. Staubsauger nach Anspruch 4, **dadurch gekennzeichnet, dass** ein gesonderter Lichtleiterabschnitt (11g) für eine Filterbeutelanzeige vorgesehen ist.

6. Staubsauger nach Anspruch 4 oder 5, **dadurch gekennzeichnet, dass** ein gesonderter Lichtleiterabschnitt (11 h) für eine Betriebsanzeige vorgesehen ist.

7. Staubsauger nach einem der Ansprüche 4 bis 6, **dadurch gekennzeichnet, dass** durch jeden Lichtleiterabschnitt (11) jeweils eine Lichtquelle (2) mit einem zugeordneten Anzeigemittel (1) optisch verbunden ist.

8. Staubsauger nach Anspruch 7, **dadurch gekennzeichnet, dass** jeder Lichtleiterabschnitt (11) eine der Lichtquelle (2) zugewandte Eintrittsfläche (5) aufweist, die mit zwei den Anzeigefeldern zugewandten Austrittsflächen (6) des Anzeigemittels (1) optisch verbunden ist.

9. Staubsauger nach Anspruch 8, **dadurch gekennzeichnet, dass** das Lichtleiterbauteil (4) mindestens eine Reflektionsfläche (13) aufweist, zum Reflektieren zumindest eines Teils des über die Eintrittsflächen (5) in das Lichtleiterbauteil (4) eingeleitete Licht in Richtung der Austrittsflächen (6).

10. Staubsauger nach einem der vorhergehenden Ansprüche, **dadurch gekennzeichnet, dass** das Lichtleiterbauteil (4) Rastmittel (10) aufweist, zur Befestigung des Lichtleiterbauteil (4) an der elektrischen Baueinheit (3).

## Claims

1. Vacuum cleaner with at least one indicating means (1), which is arranged at a housing (9) and which is supplied with light, by at least one associated electrical light source (2), for optical indication of an operating state, with an electrical component (3) which controls the at least one light source (2) in drive in dependence on the operating state, wherein arranged between light source (2) and indicating means (1) is an optical waveguide component (4) which conducts light emitted by the at least one light source (2) to the at least one indicating means (1), which has a threshold arrow indicating the power of the vacuum cleaner, the arrow being correspondingly illuminated in dependence on the power of the vacuum cleaner.

2. Vacuum cleaner according to claim 1, **characterised in that** the indicating means (1) differ in size, shape or colour.

3. Vacuum cleaner according to claim 1 or 2, **characterised in that** the threshold arrow has a plurality of differently dimensioned indicating units which form a row of indicating fields of increasing size for the power indication.

4. Vacuum cleaner according to one of the preceding claims, **characterised in that** the optical waveguide component (4) comprises a plurality of optical waveguide sections (11) which conduct the light, which is emitted by different light sources (2), to separate indicating fields.

5. Vacuum cleaner according to claim 4, **characterised in that** a separate optical waveguide section (11g) is provided for a filter bag indication.

6. Vacuum cleaner according to claim 4 or 5, **characterised in that** a separate optical waveguide section (11h) is provided for an operating indication.

7. Vacuum cleaner according to one of claims 4 to 6, **characterised in that** a respective light source (2) is optically connected with an associated indicating means (1) by each optical waveguide section (11).

8. Vacuum cleaner according to claim 7, **characterised in that** each optical waveguide section (11) has an entry surface (5) which faces the light source (2) and which is optically connected with two exit surfaces (6), which face the indicating fields, of the indicating means (1).

9. Vacuum cleaner according to claim 8, **characterised in that** the optical waveguide component (4) has at least one reflector surface (13) for reflecting at least a part of the light, which enters the optical waveguide component (4) by way of the entry surfaces (5), in the direction of the exit surfaces (6).

10. Vacuum cleaner according to one of the preceding claims, **characterised in that** the optical waveguide component (4) has detent means (10) for fastening the optical waveguide component (4) to the electrical component (3).

## Revendications

1. Aspirateur comprenant au moins un moyen d'affichage (1) disposé sur un boîtier (9), qui est alimenté en lumière par au moins une source lumineuse (2) électrique y attribuée, pour l'affichage optique d'un état de service, avec un module (3) électrique, qui active l'au moins une source lumineuse (2) en fonction de l'état de service, un composant conducteur de lumière (4), étant disposé entre la source lumineuse (2) et le moyen d'affichage (1), lequel composant achemine de la lumière émise par l'au moins une source lumineuse (2) à l'au moins un moyen d'affichage (1), qui présente une flèche seuil affichant la puissance de l'aspirateur qui est éclairée de façon appropriée en fonction de la puissance de l'aspirateur.

2. Aspirateur selon la revendication 1, **caractérisé en ce que** les moyens d'affichage (1) se différencient au niveau de la grandeur, de la forme ou de la couleur.

3. Aspirateur selon la revendication 1 ou 2, **caractérisé en ce que** la flèche seuil présente une pluralité d'unités d'affichage dimensionnées différemment, qui forment pour l'affichage de la puissance une série de champs d'affichage de grandeur croissante.

4. Aspirateur selon l'une quelconque des revendications précédentes, **caractérisé en ce que** le composant conducteur de lumière (4) comprend une pluralité de tronçons conducteurs de lumière (11), qui acheminent la lumière émise par différentes sources lumineuses (2) dans des champs d'affichage séparés.

5. Aspirateur selon la revendication 4, **caractérisé en ce qu'**un tronçon conducteur de lumière (11g) séparé est prévu pour un affichage de boîte à filtres.

6. Aspirateur selon la revendication 4 ou 5, **caractérisé en ce qu'**un tronçon conducteur de lumière (11 h) séparé est prévu pour un affichage de service.

7. Aspirateur selon l'une quelconque des revendications 4 à 6, **caractérisé en ce que** à chaque fois une source de lumière (2) est reliée optiquement à un moyen d'affichage (1) attribué par chaque tronçon conducteur de lumière (11).

8. Aspirateur selon la revendication 7, **caractérisé en ce que** chaque tronçon conducteur de lumière (11) présente une surface d'entrée (5) tournée vers la source de lumière (2) qui est reliée optiquement à deux surfaces de sortie (6), tournées vers les champs d'affichage, du moyen d'affichage (1).

9. Aspirateur selon la revendication 8, **caractérisé en ce que** le composant conducteur de lumière (4) présente au moins une surface de réflexion, pour la réflexion d'au moins une partie de la lumière, introduite par les surfaces d'entrée (5) dans le composant conducteur de lumière (4), en direction des surfaces de sortie (6).

10. Aspirateur selon l'une quelconque des revendications précédentes, **caractérisé en ce que** le composant conducteur de lumière (4) présente des moyens d'encliquetage (10), pour la fixation du composant conducteur de lumière (4) sur le module (3) électrique.
